# EUROPÄISCHE PATENTSCHRIFT

(11) **EP 3 601 072 B1**
(45) Veröffentlichungstag und Bekanntmachung des Hinweises auf die Patenterteilung: **08.06.2022**
(21) Anmeldenummer: 17825784.6
(22) Anmeldetag: 13.12.2017
(51) Int. Cl.: B65D 1/02, B65D 79/00

(54) **KUNSTSTOFFBEHÄLTNIS MIT SCHWENKBAREM BODENABSCHNITT**
PLASTICS CONTAINER WITH PIVOTABLE BASE SECTION
CONTENANT EN MATIÈRE PLASTIQUE À PARTIE FOND PIVOTANTE

(30) Priorität: 21.03.2017 DE 102017106000
(43) Veröffentlichungstag der Anmeldung: 05.02.2020
(73) Patentinhaber: Krones AG, 93073 Neutraubling (DE)
(72) Erfinder: LAINE, Ludovic, 93073 Neutraubling (DE); HÜTTNER, Gerald, 93073 Neutraubling (DE); TISSMER, Bastian, 93073 Neutraubling (DE); BI-JANG, Wang, 93073 Neutraubling (DE)
(74) Vertreter: Bittner, Bernhard
(86) Internationale Anmeldenummer: PCT/EP2017/082527
(87) Internationale Veröffentlichungsnummer: WO 2018/171920

(56) Entgegenhaltungen:
- WO-A1-2013/025463
- US-A- 5 503 283
- US-A1- 2002 063 105
- US-A1- 2013 180 943

## Beschreibung

Die vorliegende Erfindung bezieht sich auf Kunststoffbehältnisse. Kunststoffbehältnisse sind aus dem Stand der Technik seit Langem bekannt, insbesondere auch zur Aufbewahrung von Getränken. Beim Befüllen von Behältnissen sind unterschiedliche Vorgehensweisen bekannt. So ist es bei einer Herstellungsvariante bekannt, dass eine Flüssigkeit, wie ein Getränk, heiß in die Behältnisse abgefüllt wird und anschließend das Behältnis verschlossen wird. Diese Vorgehensweise eignet sich beispielsweise bei der Abfüllung von Eistees und dergleichen. Bei dieser Abfüllung tritt jedoch das Problem auf, dass sich die in dem Behältnis befindliche Flüssigkeit zusammenzieht und damit das Behältnis unter einen Unterdruck gesetzt wird. Aus dem Stand der Technik sind Behältnisse bekannt, bei denen dieser Unterdruck durch Paneele in den Seitenwänden ausgeglichen wird, welche sich aufgrund des Unterdrucks verformen. Auch sind aus dem Stand der Technik Behältnisse bekannt, bei denen ein Bodenteil von einer ersten Stellung in eine zweite Stellung verschoben bzw. geklappt werden kann, um so das Innenvolumen des Behältnisses zu verringern. Ein Kunststoffbehältnis gemäß dem Oberbegriff des Anspruchs 1 ist aus der WO 2013/025463 A1 bekannt.

Der vorliegenden Erfindung liegt die Aufgabe zugrunde, ein Kunststoffbehältnis zur Verfügung zu stellen, welches insbesondere auch bei niedrigem Fertigblasdruck eine verbesserte Ausformbarkeit der Bodengeometrie ermöglicht. Diese Aufgabe wird erfindungsgemäß durch den Gegenstand des unabhängigen Patentanspruchs erreicht. Vorteilhafte Ausführungsformen und Weiterbildungen sind Gegenstand der Unteransprüche.

Ein erfindungsgemäßes Kunststoffbehältnis weist einen Mündungsabschnitt auf sowie einen sich an diesen Mündungsabschnitt in einer Längsrichtung des Kunststoffbehältnisses anschließenden Grundkörper, der ein Innenvolumen des Kunststoffbehältnisses vollständig in einer Umfangsrichtung des Kunststoffbehältnisses umgibt. Weiterhin weist das Kunststoffbehältnis einen Bodenabschnitt auf, der sich an den Grundkörper anschließt, wobei dieser Bodenabschnitt einen Zentralbereich aufweist sowie eine in der Umfangsrichtung des Kunststoffbehältnisses verlaufende Wandung, welche sich von dem Zentralbereich zu dem Grundkörper erstreckt (in diesem Sinne kann es sich bei dieser Wandung daher auch um eine bezüglich der Längsrichtung umlaufende Wandung handeln.

Dabei ist der Zentralbereich gegenüber dem Grundkörper zwischen wenigstens zwei Stellungen schwenkbar, wobei diese beiden Stellungen sich hinsichtlich eines Innenvolumens des Kunststoffbehältnisses unterscheiden und wobei zum Erreichen dieser Schwenkstellungen zwischen dem Zentralbereich und dem Grundkörper ein bezüglich der Längsrichtung des Kunststoffbehältnisses umlaufender Schwenkabschnitt ausgebildet ist.

Die in der Umfangsrichtung verlaufende) Wandung weist wenigstens teilweise bezüglich der Längsrichtung des Kunststoffbehältnisses umlaufende und voneinander beabstandete Rillen auf, und der Zentralbereich weist einen sich in Richtung des Innenraums des Kunststoffbehältnisses erstreckenden Vorsprung auf.

Erfindungsgemäß sind in der umlaufenden Wandung sich wenigstens abschnittsweise in einer radialen Richtung erstreckende Stege angeordnet, wobei die Stege die einzelnen Rillen im Wesentlichen vollständig ausfüllen und durch Randabschnitte der Rillen unterbrochen werden.

Bevorzugt ist dabei dieser Vorsprung domartig ausgebildet. Bevorzugt sind die Rillen innerhalb der in der Umfangsrichtung verlaufenden Wandung ausgebildet.

Die besagten Rillen bilden bevorzugt eine Ausgestaltung in der Art einer Lautsprechermembran. Diese ist bevorzugt in ihrer Gesamtheit schwenkbar. Bevorzugt weist die Wandung in wenigstens einer Schwenkstellung eine konusförmige Gestalt auf.

Bevorzugt handelt es sich bei dem Kunststoffbehältnis um ein Kunststoffbehältnis, welches zur Aufnahme eines Flüssigkeitsvolumens geeignet und bestimmt ist, welches zwischen 200 ml und 2 I liegt. Bevorzugt handelt es sich bei dem Kunststoff um PET. Es kämen jedoch auch andere Kunststoffe in Betracht.

Bevorzugt ist im Zentrum des Zentralbereichs wiederum ein Anspritzpunkt angeordnet. Bei einer weiteren vorteilhaften Ausführungsform ist der Grundkörper ohne Paneele ausgebildet und insbesondere ohne einen Bereich, welcher dazu geeignet und dazu bestimmt ist, Unterdrücke innerhalb des Behältnisses durch eine Volumenänderung des Innenraums zu kompensieren. Damit erfolgt diese Kompensation der Volumenänderung ausschließlich über den Bodenbereich und insbesondere über den genannten schwenkenden Mechanismus des Bodenabschnitts. Bevorzugt ist dieser Zentralbereich rotationssymmetrisch ausgebildet. Bevorzugt enthält dieser Zentralbereich auch eine (geometrische) Symmetrieachse des Kunststoffbehältnisses.

Bei einer weiteren vorteilhaften Ausführungsform ist der besagte Schwenkabschnitt radial außerhalb der umlaufenden Rillen ausgebildet. Dies bedeutet, dass bevorzugt alle Wandungsbereiche, welche auch die umlaufenden Rillen beinhalten, gemeinsam geschwenkt werden.

Bevorzugt ist eine Basiskontur (betrachtet in einer Projektion in einer zu der Längsrichtung des Behältnis senkrecht stehenden Richtung) des Bodens (d.h. eine Kontur, welche etwa die oben erwähnten Rillen nicht berücksichtigt) ausgehend von einem zentralen Mittelpunkt, aufgebaut durch einen ersten bevorzugt geradlinigen Abschnitt oder einen Abschnitt mit einem sehr hohen Krümmungsradius, an den sich eine Krümmung mit einem vorgegebenen Radius anschließt. Bevorzugt schließt sich an diesen Radius wiederum ein weiterer geradliniger Abschnitt an (an diesem geradlinigen Abschnitt sind die bevorzugt die oben erwähnten Rillen angeordnet) und an diesem geradlinigen Abschnitt wiederum ein gekrümmter Bereich, wobei dieser gekrümmte Bereich bevorzugt in der umgekehrten Krümmungsrichtung gekrümmt ist als der oben genannte erste gekrümmte Bereich.

An den besagten zweiten gekrümmten Bereich schließt sich bevorzugt wieder ein im Wesentlichen geradliniger Abschnitt an und an diesen wiederum ein Krümmungsabschnitt, der hier jedoch als Funktion höheren Grades bzw. als sogenannter Spline ausgebildet ist. An diesen besagten ersten Spline schließt sich bevorzugt ein zweiter Spline mit umgekehrter Krümmung an. An diesen zweiten Spline wiederum schließt sich bevorzugt ein geradlinig verlaufender Abschnitt an, der sich zumindest auch in Richtung der Längsrichtung nach unten erstreckt (Begriffe wie nach unten oder oben sind bei einem aufrecht stehenden Behältnis definiert).

An diesen im Wesentlichen geradlinigen Abschnitt kann sich ein im Wesentlichen horizontaler Abschnitt anschließen und an diesen wiederum der oben erwähnte Grundkörper oder auch ein gekrümmter Abschnitt mit einem sehr hohen Krümmungsradius. Bevorzugt wird daher durch ein Schwenken bzw. Bewegen des benannten Wandungsabschnitts eine Volumenänderung des Innenraums des Behältnisses erreicht.

Bei einer weiteren vorteilhaften Ausführungsform geht der Zentralbereich in einen gekrümmten umlaufenden Übergangsabschnitt in die umlaufende (d.h. die in Umfangsrichtung verlaufende) Wandung über, wobei sich bevorzugt eine Krümmung dieses Übergangsabschnitts in der ersten und der zweiten Schwenkstellung unterscheidet. Damit kann bevorzugt dieser Übergangsabschnitt ebenfalls als zweiter Schwenkabschnitt dienen. Der besagte Wandungsbereich verläuft daher bevorzugt zwischen dem besagten Übergangsabschnitt und dem oben erwähnten Schwenkabschnitt. Bei einem Verschwenken des Wandungsabschnitts werden dieser Übergangsabschnitt und der Schwenkabschnitt gegenläufig gekrümmt bzw. die jeweiligen Krümmungen ändern sich gegenläufig.

Bei einer weiteren vorteilhaften Ausführungsform weist der Zentralbereich einen im Wesentlichen senkrecht zu der Längsrichtung ausgebildeten Zentrumsbereich auf, der bevorzugt in der Längsrichtung des Kunststoffbehältnisses näher an dem Mündungsabschnitt liegt als der Schwenkabschnitt. Unter einem näher an dem Mündungsabschnitt liegen wird dabei insbesondere verstanden, dass dieser Zentrumsbereich (und insbesondere dessen höchstgelegener Teil) bei einem aufrecht stehenden Behältnis höher liegt als der besagte Schwenkabschnitt. Dies bedeutet, dass der Vorsprung weiter in das Behältnisinnere reicht als die Höhe des besagten Schwenkabschnitts.

Unter einem im Wesentlichen senkrecht zur Längsrichtung ausgebildeten Zentralbereich wird verstanden, dass dieser Zentralbereich gegenüber der horizontalen Richtung oder der senkrecht zur Längsrichtung stehenden Richtung einen Winkel ausbildet, der kleiner ist als 20 °, bevorzugt kleiner als 15 °, bevorzugt kleiner als 10 ° und besonders bevorzugt kleiner als 5 °. Außerdem wird bei der besagten horizontalen Ausrichtung ein etwaiger im Zentrum befindlicher Anspritzpunkt vernachlässigt.

Bei einer weiteren vorteilhaften Ausführungsform weist der Grundkörper und insbesondere die Umfangswand des Grundkörpers keine Elemente auf, welche speziell dafür geeignet und bestimmt sind, auftretenden Unterdruck zu kompensieren. Darunter ist zu verstehen, dass diese Wand insbesondere nicht die Paneele aufweist, welche im Stand der Technik teilweise vorhanden sind, um Unterdrücke, welche innerhalb des Behältnisses auftreten zu kompensieren.

Bei einer weiteren vorteilhaften Ausführungsform weist der Zentralbereich einen weiteren im Wesentlichen geradlinigen Abschnitt auf, der sich zumindest auch in der Längsrichtung des Behältnisses erstreckt. Bevorzugt schließt dieser geradlinige Abschnitt mit der Längsrichtung des Behältnisses einen Winkel ein, der zwischen 0 ° und 50 °, bevorzugt zwischen 0 ° und 40 °, bevorzugt zwischen 0 ° und 30 °, bevorzugt zwischen 0 ° und 20 ° und besonders bevorzugt zwischen 0 ° und 10 ° liegt. Bevorzugt geht der Zentralbereich über einen gekrümmten Abschnitt in den besagten geradlinigen Abschnitt über.

Bei einer weiteren vorteilhaften Ausführungsform schließt sich in einer radialen Richtung des Kunststoffbehältnisses an dem Schwenkabschnitt ein sich in der Längsrichtung des Behältnisses weg von dem Mündungsbereich erstreckender umlaufender äußerer Übergangsabschnitt an. Bevorzugt verläuft damit dieser äußere Übergangsabschnitt zumindest auch mit einer Komponente in Längsrichtung des Behältnisses nach unten (bei aufrecht stehendem Behältnis).

Bevorzugt erstreckt sich dieser Übergangsabschnitt im Wesentlichen geradlinig. Es wäre jedoch auch denkbar, dass dieser Übergangsabschnitt eine Krümmung mit einem sehr hohen Krümmungsradius aufweist, beispielsweise einen Krümmungsradius von mehr als 5cm, bevorzugt von mehr als 10cm.

Bevorzugt schließt dieser Übergangsabschnitt mit der Längsrichtung des Kunststoffbehältnisses einen Winkel ein, der kleiner ist als 40 °, bevorzugt kleiner als 30 °, bevorzugt kleiner als 25 °, bevorzugt kleiner als 20 ° und besonders bevorzugt kleiner als 15 °.

Bei einer weiteren vorteilhaften Ausführungsform ist zwischen einer äußersten Rille und dem besagten Übergangsabschnitt ein umlaufender geradliniger Abschnitt ausgebildet. Bevorzugt ist auch zwischen der innersten Rille und dem Zentralbereich ein umlaufender geradliniger

Abschnitt ausgebildet. Unter einem geradlinigen Verlauf wird hierbei ein Verlauf verstanden, der in einer Projektion, welche senkrecht zu der Längsrichtung des Behältnisses steht, geradlinig oder im Wesentlichen geradlinig verläuft.

Bei einer weiteren vorteilhaften Ausführungsform schließt sich an den umlaufenden äußeren Übergangsabschnitt ein sich im Wesentlichen senkrecht zu der Längsrichtung erstreckender Abstützabschnitt des Kunststoffbehältnisses an. Bevorzugt wird das Behältnis auf diesem Abstützabschnitt abgestellt.

Damit verläuft dieser Abstützabschnitt im Wesentlichen ringförmig und auf diesem Abstützabschnitt ruht das Behältnis. Bevorzugt ist dieser Abstützabschnitt gegenüber einer horizontalen Richtung um nicht mehr als 30 °, bevorzugt um nicht mehr als 20 °, bevorzugt um nicht mehr als 10 ° und besonders bevorzugt um nicht mehr als 5 ° geneigt.

Bei einer weiteren vorteilhaften Ausführung ist in diesem besagten Stützabschnitt wenigstens eine Aussparung angeordnet, welche bei stehendem Behältnis von einer Standfläche des Behältnisses beabstandet ist. Vorteilhaft sind in dem Abstützabschnitt wenigstens zwei Aussparungen angeordnet, bevorzugt wenigstens drei Aussparungen und besonders bevorzugt wenigstens vier Aussparungen. Besonders bevorzugt sind diese Aussparungen gleichmäßig in Umfangsrichtung des Behältnisses verteilt.

Dabei ist es möglich, dass eine einzelne Aussparung einen Umfangswinkel (betrachtet bezüglich der Längsrichtung des Behältnisses) einschließt, der größer ist als 5 °, bevorzugt größer als 10 °, bevorzugt größer als 15 ° und besonders bevorzugt größer als 20 °. Bei einer weiteren bevorzugten Ausführungsform schließt diese Aussparung einen Umfangswinkel ein, der kleiner ist als 60 °, bevorzugt kleiner als 50 °, bevorzugt kleiner als 40 ° und besonders bevorzugt kleiner als 30 °.

Erfindungsgemäß sind in der in Umfangsrichtung verlaufenden Wandung sich wenigstens abschnittsweise in einer radialen Richtung des Behältnisses bzw. der Bodenwandung erstreckende Stege angeordnet.

Erfindungsgemäß füllen die Stege die einzelnen Rillen im Wesentlichen vollständig aus und werden durch Randabschnitte der Rillen unterbrochen.

Dieser Steg dient bevorzugt zur Stabilisierung des Bodenwandungsabschnitts.

Bei einer weiteren bevorzugten Ausführungsform ist in dem Grundkörper eine bezüglich der Längsrichtung umlaufende Rille angeordnet, wobei bevorzugt diese Rille in wenigstens einer Schwenkstellung unterhalb wenigstens eines Abschnitts des Zentralbereichs angeordnet ist. Bevorzugt handelt es sich hierbei um die obere Schwenkstellung, in der das Innenvolumen des Behältnisses verkleinert ist. Bei dieser bevorzugten Ausführung ist zumindest in einer hochgestellten Position des Bodenabschnitts (in der das Innenvolumen des Behältnisses verkleinert ist) eine Spitze bzw. ein oberer Bereich des Vorsprungs in der Längsrichtung oberhalb der umlaufenden Rille angeordnet.

Da die Behältnisgeometrie die Bodenseitenwand für die hier beschriebene Art von Behältnisböden sehr stabil sein muss, um in einem abgekühlten Zustand das definierte Umklappen des Bodenabschnitts zu ermöglichen, ist bevorzugt in der Bodenseitenwand, das heißt im Grundkörper, die genannte Stabilisierungsgeometrie in Form der Rille angeordnet. Allerdings wäre es auch denkbar auf eine derartige Rille zu verzichten. Dabei kann die besagte Rille als Trapezgeometrie ausgeführt sein, es wären jedoch auch kreisförmige, elliptische, rechteckige oder dreiecksförmige Geometrien als Variante für diese Rille denkbar. Die Höhenposition dieser umlaufenden Rille kann dabei in Abhängigkeit zur Höhe eines Anspritzpunktes des Behältnisses gewählt werden oder auch im Verhältnis zu einer Höhe eines Schwenkpunkts bzw. Drehpunkts des Schwenkabschnitts. Bevorzugt ist das Verhältnis der Höhe zu dem Schwenkabschnitt zu der Höhe der umlaufenden Rille (gemessen von der Standfläche des Bodens aus) zwischen 0,5 und 3,5, bevorzugt zwischen 1,0 und 2,5. Ein Verhältnis zwischen der Höhe des Anspritzpunktes zur Höhe der umlaufenden Rille kann beispielsweise zwischen 0,5 und 2,5 liegen.

Bei einer weiteren vorteilhaften Ausführungsform steht eine Eintauchtiefe dieser umlaufenden Rille im Wesentlichen senkrecht auf einer Außenfläche des Bodens. Diese kann sich dabei zwischen 0,5 mm und 5 mm bewegen, bevorzugt zwischen 1 mm und 3 mm.

Ein Öffnungswinkel der besagten Rille kann beispielsweise zwischen 40 ° und 160 ° liegen, bevorzugt zwischen 50 ° und 120 ° und besonders bevorzugt zwischen 60 ° und 90 °.

Bei einer weiteren vorteilhaften Ausführungsform ist zwischen wenigstens zwei Rillen der in der Umfangsrichtung verlaufenden Wandung ein sich in einer radialen Richtung des Behältnisses erstreckender Verbindungsabschnitt angeordnet. Bevorzugt ist dabei dieser Abschnitt kürzer als die Erstreckung der jeweiligen Rille in der radialen Richtung. Bevorzugt ist dabei dieser Abschnitt kürzer als 80 % der radialen Erstreckung der Rille, bevorzugt kürzer als 70 %, bevorzugt kürzer als 60 %, besonders bevorzugt kürzer als 50 % und besonders bevorzugt kürzer als 40 %.

Bei einer weiteren bevorzugten Ausführungsform verläuft dieser Verbindungsabschnitt im Wesentlichen geradlinig. Es wäre jedoch auch möglich, dass dieser Verbindungabschnitt gekrümmt mit einem sehr hohen Krümmungsradius ausgebildet ist.

Bei einer weiteren vorteilhaften Ausführungsform erstreckt sich dabei dieser Verbindungsabschnitt ebenfalls in einer Umfangsrichtung des Behältnisses bzw. des Behältnisbodens.

Die vorliegende Erfindung ist weiterhin auf eine Blasformanordnung zum Herstellen von Kunststoffbehältnissen gerichtet, wobei diese Blasformanordnung ein Bodenteil aufweist, welches wiederum eine Oberfläche aufweist, die zur Erzeugung eines Kunststoffbehältnisses der oben beschriebenen Art geeignet und bestimmt ist.

Bevorzugt erlaubt diese Blasform während eines Blasformvorgangs eine Bewegung des Bodenteils der Blasform gegenüber den Seitenteilen in der Längsrichtung des Kunststoffbehältnisses.

Weitere Vorteile und Ausführungsformen ergeben sich aus den beigefügten Zeichnungen: Darin zeigen:
- Fig. 1a: eine vereinfachte Darstellung eines erfindungsgemäßen Behältnisses;
- Fig. 1b: eine Darstellung der Schwenkstellungen des Bodens des Behältnisses;
- Fig. 1c: eine Darstellung des Behältnisses mit einem Bodenteil;
- Fig. 2a: eine Draufsicht auf den Boden eines erfindungsgemäßen Behältnisses;
- Fig. 2b: eine Seitenansicht des Bodens eines erfindungsgemäßen Behältnisses;
- Fig. 2c: eine perspektivische Ansicht des Bodens eines Behältnisses;
- Fig. 2d: eine Seitenansicht des Bodens eines erfindungsgemäßen Behältnisses;
- Fig. 3: eine Darstellung einer Basiskontur des Bodens;
- Fig. 4: eine weitere Darstellung eine Basiskontur des Bodens;
- Fig. 5: eine Darstellung der Bodenkontur einschließlich der Rillen;
- Fig. 6: eine Draufsicht von unten auf den Boden;
- Fig. 7: eine weitere Darstellung der Bodenkontur;
- Fig. 8: eine perspektivische Ansicht der Bodenkontur;
- Fig. 9: eine Detailansicht der Bodenkontur;
- Fig. 10: eine perspektivische Detailansicht der Bodenkontur;
- Fig. 11: eine weitere Seitenansicht des Bodens; und
- Fig. 12: eine Seitenansicht des Bodens mit Darstellung der Aussparung.

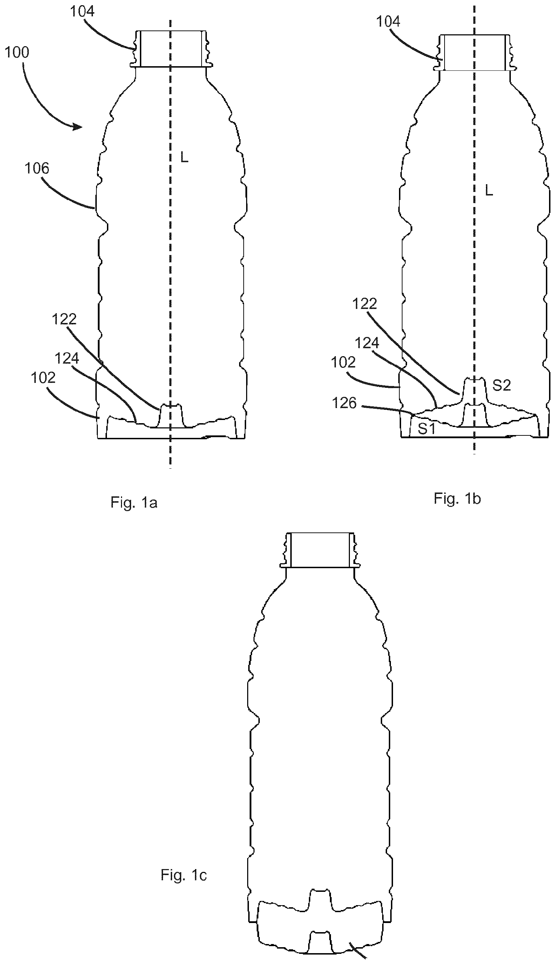

Fig. 1a zeigt eine Seitenansicht eines erfindungsgemäßen Behältnisses 100. Dieses Behältnis weist einen Mündungsabschnitt 104 auf, an den sich zumindest mittelbar ein Grundkörper 106 anschließt. Dieser Grundkörper ist bezüglich der Längsrichtung L des Behältnisses 100 umlaufend ausgebildet. Das Bezugszeichen 102 kennzeichnet den Bodenabschnitt des Behältnisses 100. Dabei bezieht sich das Bezugszeichen 122 auf einen Zentralbereich dieses Bodenabschnitts 102 und das Bezugszeichen 124 auf die in der Umfangsrichtung des Behältnisses verlaufende bzw. umlaufend ausgebildete Wandung. In Fig. 1a erstreckt sich daher diese Wandung 124 senkrecht zu der Figurenebene. In dem in Fig. 1a gezeigten Zustand wird das Behältnis mit einem heißen Getränk befüllt.

Zur Herstellung dieses schwenkbaren Bodens des Behältnisses wird bevorzugt eine Blasform verwendet, welche während des Blasformvorgangs eine Bewegung eines Bodenteils dieser Blasform gegenüber den Seitenteilen der Blasform erlaubt. Bevorzugt findet dabei ein Bodenhub des Bodenteils der Blasform gegenüber den Seitenteilen der Blasform von weniger als 20mm statt. Bei dem in Fig. 1a gezeigten Zustand ist ein Bodenteil der Blasform jedoch in einem eingefahrenen Zustand.

Fig. 1b zeigt eine weitere Darstellung des in Fig. 1a gezeigten Behältnisses. Dabei sind insbesondere auch die beiden Schwenkstellungen S1, S2 des Bodenabschnitts 102, genauer der Wandung 124 dargestellt. In der Stellung S2 ist ein Innenvolumen des Bodens gegenüber der Stellung S1 verkleinert. Das Bezugszeichen 126 kennzeichnet einen bezüglich der Längsrichtung des Behältnisses umlaufenden Schwenkabschnitt, bezüglich dessen die Wandung 124 zwischen der oberen Stellung S2 und der unteren Stellung S1 schwenkbar ist.

Die Stellung S2 wird nach der Heißabfüllung dem Verschließen und Abkühlen erreicht. Das Behältnis hat Vakuum gezogen und die Loudspeaker Membran d.h. die Wandung 124 ist beim Vakuum ziehen umgeklappt.

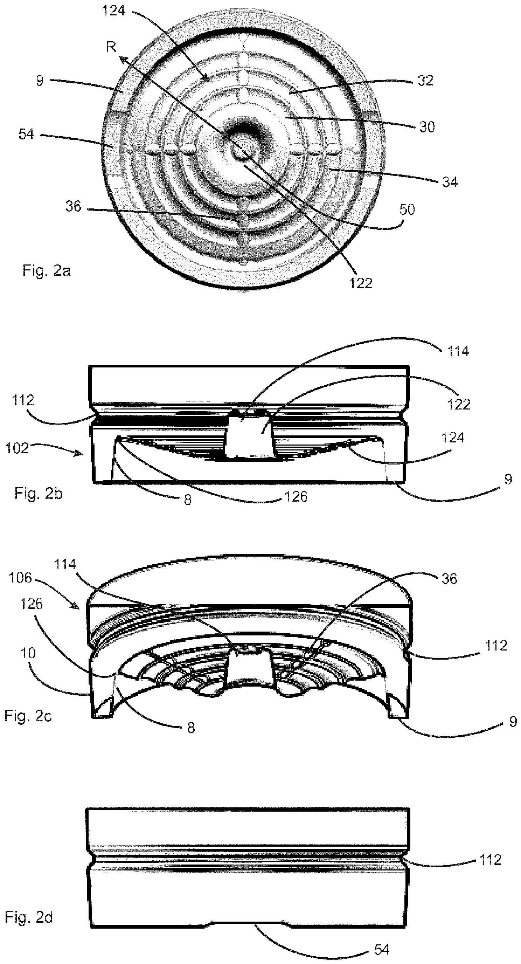

Fig. 2a zeigt eine Draufsicht auf den Boden eines erfindungsgemäßen Behältnisses. Dieser Boden 102 weist dabei wieder den Zentralbereich 122 auf, an den sich die (auch) in Umfangsrichtung verlaufende Wandung 124 anschließt. Diese Umfangswandung weist hier drei Rillen 30, 32 und 34 auf, welche in das Behältnis hineinragen. Diese Rillen weisen dabei jeweils einen elliptischen Querschnitt auf. Das Bezugszeichen 36 kennzeichnet einen sich in einer radialen Richtung R erstreckenden Steg. Das Bezugszeichen 9 kennzeichnet einen ringförmigen Stützabschnitt, auf dem das Behältnis 100 aufrecht stehen kann. Das Bezugszeichen 54 kennzeichnet eine Aussparung, welche in diesem Stützabschnitt angebracht ist.

Fig. 2b zeigt eine Seitenansicht des Bodenabschnitts 102 (in der Schwenkstellung S1). Hier erkennt man, dass sich an den Schwenkabschnitt 126 radial nach außen ein geradliniger Abschnitt 8 anschließt, der sich schräg bezüglich der Längsrichtung L nach unten erstreckt.

Daneben ist auch wieder der Stützabschnitt 9 erkennbar. Das Bezugszeichen 114 kennzeichnet einen oberen Bereich des Zentralbereichs 122. Daneben ist auch die umlaufende Rille 112 (in dem Grundkörper 106) erkennbar. Man erkennt, dass diese umlaufende Rille hier in etwa auf der gleichen Höhenposition liegt wie der obere Bereich 114. In der (nicht gezeigten zweiten Schwenkstellung würde der obere Bereich 114 über das Höhenniveau der Rille hinausragen.

Fig. 2c zeigt eine perspektivische Darstellung des Bodens 102, wobei auch hier wiederum der Schwenkabschnitt 126 und die Wandungsabschnitte 8 und 9 erkennbar sind. Das Bezugszeichen 10 kennzeichnet einen weiteren Wandungsabschnitt, in dem der Bodenabschnitt 102 in den Grundkörper 106 übergeht.

Fig. 2d zeigt eine weitere Seitenansicht des Bodenteils, wobei auch hier wieder eine Aussparung 54 in dem Stützabschnitt 9 erkennbar ist.

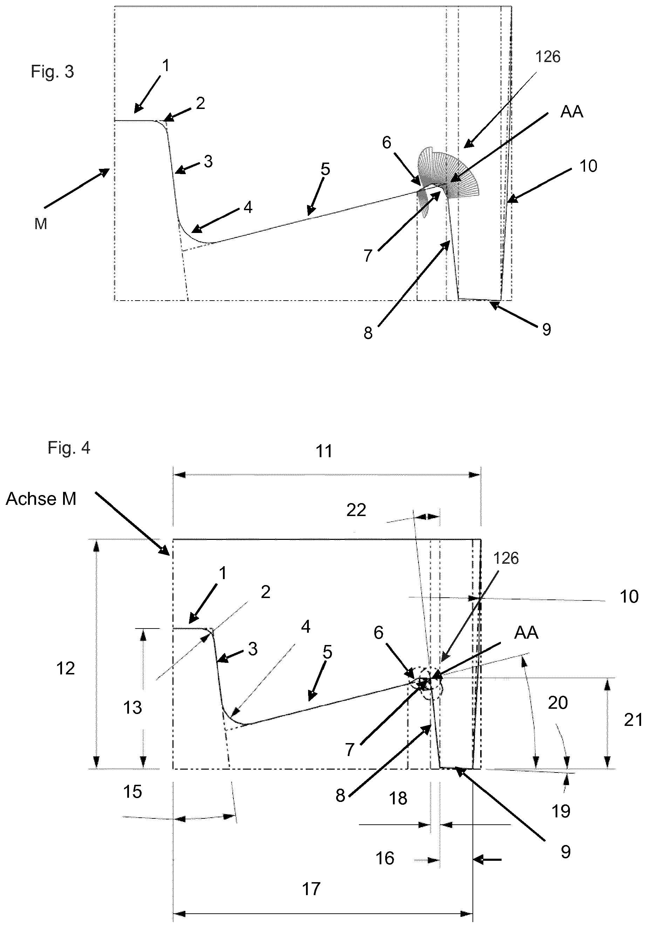

Fig. 3 zeigt eine Seitenansicht der Basiskontur des Bodenteils 102 des Behältnisses 100, also ohne Berücksichtigung der Rillen, welche an der Wandung 124 (bzw. dem geradlinigen Abschnitt 5) ausgebildet sind. Die Basiskontur wird beschrieben durch die Gerade 1, den Radius 2, die Gerade 3, den Radius 4, die Gerade 5 den Spline 6, den Spline 7, die Gerade 8 die Gerade 9 und den Radius 10.

Aus dieser Kontur wird die sogenannte Außenfläche der Bodengeometrie durch eine Rotation um die Rotationsachse M erzeugt. Ein Spline n-ten Grades (auch Polynomzug) ist eine Funktion, die stückweise aus Polynomen höchstens n-ten Grades zusammengesetzt ist. Dabei werden an den Stellen, an denen zwei Polynomstücke zusammenstoßen (man spricht auch von Knoten), bestimmte Bedingungen gestellt, etwa dass der Spline (n-1)-mal stetig differenzierbar ist.

Die Übergänge der Gerade 1, des Radius 2, der Gerade 3, des Radius 4, der Gerade 5 sind bevorzugt wenigstens teilweise und besonders bevorzugt alle tangentenstetig. Der Übergang von der Gerade 5 zum Spline 6 kann krümmungsstetig, mindestens aber tangentenstetig sein. Der Spline 6 geht krümmungsstetig, mindestens tangentenstetig, in den Spline über.

Der Krümmungsverlauf des Splines 6 kann durch ein Polynom n-ten Grades beschrieben werden. Dabei kann der Grad des Polynom von n=2 bis n=7 sein. Der Übergang des Spline 7 in die Gerade 8 kann krümmungsstetig, mindestens aber tangentenstetig sein. Der Krümmungsverlauf des Splines 7 kann durch ein Polynom n-ten Grades beschrieben werden. Dabei kann der Grad des Polynom von n=2 bis n=7 sein.

Des Weiteren beschreiben die Gerade 1, der Radius 2, die Gerade 3, der Radius 4, die Gerade 5 der Spline 6 und der Spline 7 eine sogenannte Loudspeaker (Lautsprecher) Membran, welche sich beim kontrollierten Abkühlen mittels Rückkühlers der verschlossenen Flasche von Abfülltemperatur des heißgefüllten Produkts auf Raumtemperatur im Drehpunkt AA einklappt bzw. einschnappt, da hier ein Vakuum in der Flasche entsteht. Dieser Drehpunkt AA ist damit auch in dem oben erwähnten Schwenkabschnitt 126 angeordnet.

Fig. 4 zeigt eine weitere Darstellung zur Veranschaulichung der Bodenkontur. Die Außendimensionen des Bodens werden durch den Außenradius 11 und die Bodenhöhe 12 festgelegt. Das Maß des Standkreisdurchmessers 17 wird durch ein Verhältnis zum Außendurchmesser 11 festgelegt. Dieses Verhältnis kann sich zwischen 0,8 und 0,99 und bevorzugt zwischen 0,85 und 0,995 bewegen, insbesondere aber zwischen 0,90 und 0,98.

Die Höhe 13 der Geraden 1 kann in einem Verhältnis zum Außendurchmesser 11 oder der Bodenhöhe 12 festgelegt sein. Der Winkel 15 der Geraden 3 kann sich bevorzugt zwischen 1° und 30°, bevorzugt zwischen 3° und 30°, insbesondere aber zwischen 5° und 15° bewegen.

Der Winkel 22 der Geraden 8 (gegenüber der Vertikalen) ist bevorzugt größer als 0°, bevorzugt größer als 1°, bevorzugt größer als 2° und besonders bevorzugt größer als 3°. Weiterhin ist dieser Winkel bevorzugt kleiner als 30°, bevorzugt kleiner als 25°, bevorzugt kleiner als 20°, bevorzugt kleiner als 15° und besonders bevorzugt kleiner als 14°.

Der Winkel 20 der Geraden 5 (gegenüber der Horizontalen) kann größer sein als 0°, bevorzugt größer als 2°, bevorzugt größer als 4° und besonders bevorzugt größer als 5°. Weiterhin ist bevorzugt dieser Winkel kleiner als 40°, bevorzugt kleiner als 30°, bevorzugt kleiner als 25°, besonders bevorzugt kleiner als 21°.

Der Winkel 19 der Geraden 9 (insbesondere gegenüber der Horizontalen) kann bevorzugt größer sein als 0°, bevorzugt größer als 1°. Weiterhin ist dieser Winkel bevorzugt kleiner als 10°, bevorzugt kleiner als 8° und besonders bevorzugt kleiner als 6°.

Die Höhe 21 der Geraden 8 kann sich (insbesondere bei einem Hub zwischen 20 bis 60mm) bevorzugt in einem Bereich bewegen, der größer ist als 0,5mm, bevorzugt größer als 1,0mm, bevorzugt größer als 3mm und besonders bevorzugt größer als 5,0mm. Bevorzugt ist die Höhe kleiner als 15mm, bevorzugt kleiner als 13mm, bevorzugt kleiner als 10mm.

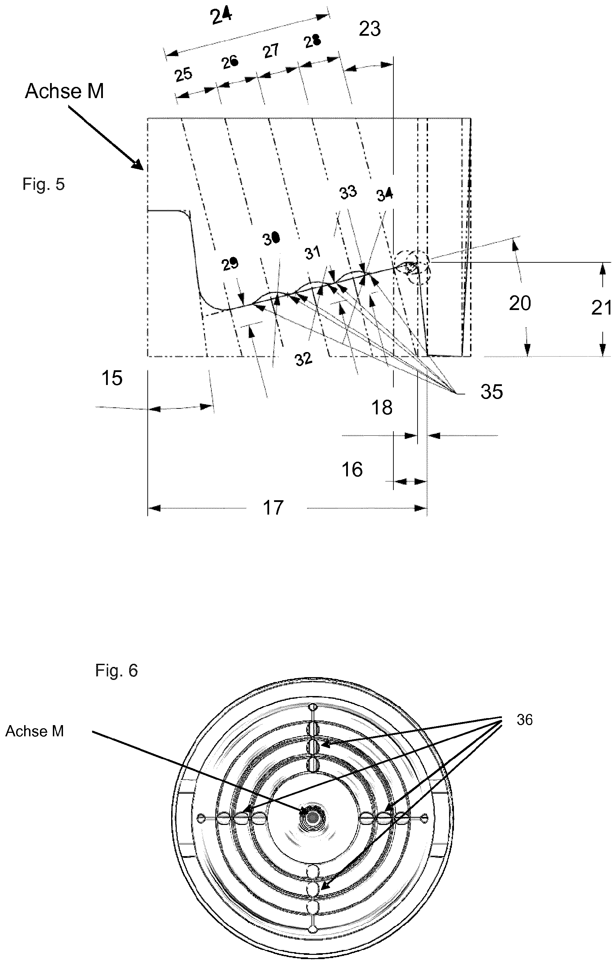

Fig. 5 zeigt eine Darstellung der Bodenkontur, wobei hier auch die einzelnen weiteren Elemente wie insbesondere die obenerwähnten Rillen 30, 32 und 34 dargestellt sind. Die Gerade 5 der Loudspeaker Membrankontur kann verschiedene Geometrieelemente haben, hier mit einer eintauchenden Radius- bzw. Kreisbogengeometrie (d.h. die Rillen 30, 32 und 34), also in der Flasche vertieft sind. Damit ragen bei dieser Ausgestaltung die Rillen in das Innere des Behältnisses hinein.

Diese Geometrie kann jedoch auch umgekehrt werden, so dass die Rillen auf der Flasche erhaben dargestellt sind. Bei der Variante mit den Kreisbögen ist bevorzugt der Radius dieser Rillen größer als 1,0mm, bevorzugt größer als 1,2mm, bevorzugt größer als 1,5mm. Bevorzugt ist der Radius kleiner als 20mm, bevorzugt kleiner als 18mm, bevorzugt kleiner als 15mm, besonders bevorzugt kleiner als 13mm und besonders bevorzugt kleiner als 11mm. Des Weiteren sind auch elliptische und kegelschnittförmige, trapezförmige oder auch dreieckige Geometrien oder Mischformen aus diesen Geometrien möglich. Diese jeweiligen Geometrien könnten alle in der Flasche vertieft oder auch erhaben sein, sowie im Wechsel vertieft und erhaben. Die Anzahl der Geometrieelemente bzw. Rillen 30, 32 und 34 kann bevorzugt zwischen 1 bis 10, insbesondere aber zwischen 2 bis 7 liegen. Diese können regelmäßig (bzw. in regelmäßigen Abständen 25, 26, 27 und 28 und auch unregelmäßig auf der Gerade 5 verteilt sein, bzw. mit gleichem Abstand als auch in ungleichem Abstand zueinander. Das Bezugszeichen 24 kennzeichnet die Summe der Abstände 25, 26, 27 und 28.

Die Rillen können alle eine gleiche Tiefe 29, 31, 33 aufweisen, es wäre aber auch möglich, dass jedes Elemente eine andere Tiefe aufweist. Die Geometrieelemente bzw. Rillen 30, 32 und 34 können auch in einem Verhältnis zur Tiefe der Elemente stehen (29, 31 und 33). So könnte eine in der radialen Richtung längere Rille etwa auch eine größere Tiefe aufweisen. Die Verrundungen 35 der einzelnen Rillen, also insbesondere der Bereich, in dem die jeweiligen Rillen in die Grundkontur übergehen kann für jede Rille gleich groß sein, es ist aber auch möglich das jedes Geometrieelement bzw. jede Rille 30, 32 und 34 unterschiedlich große Verrundungen hat.

Der Winkel 23 kann gleich oder auch ungleich dem Winkel 20 sein, um die Position, Ausprägung und Richtung der Geometrieelemente bzw. Rillen 30, 32 und 34 zu definieren.

Fig. 6 zeigt eine weitere Ansicht des Bodens des Kunststoffbehältnisses. Die Anzahl der Stege 36 der Loudspeaker Membran kann zwischen 2 und 12 liegen, vorzugsweise zwischen 3 und 8. Man erkennt, dass hier die Stege jeweils die einzelnen Rillen im Wesentlichen vollständig ausfüllen. Die Stege werden durch Randabschnitte der Rillen 30, 32 und 34 unterbrochen.

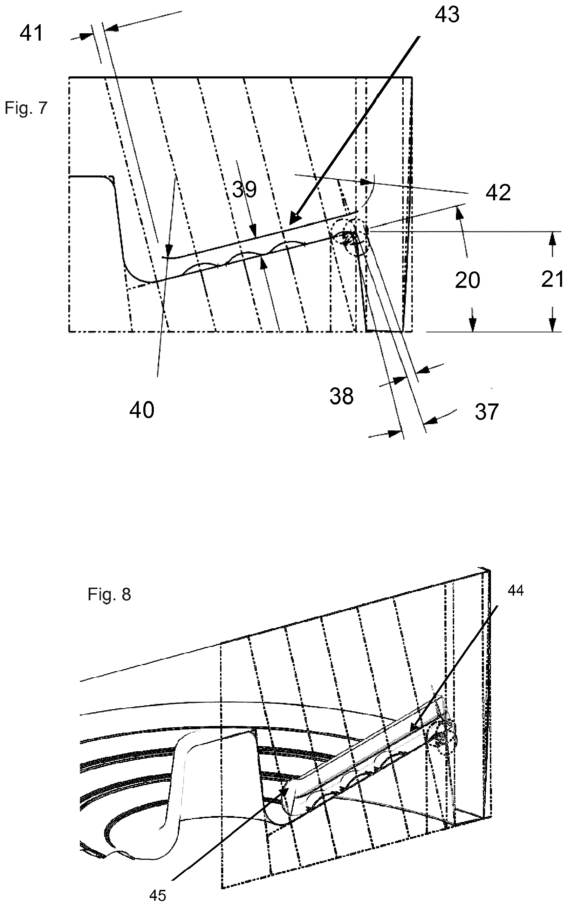

Fig. 7 und 8 zeigen weitere Ansichten des Behältnisbodens zur Veranschaulichung der Geometrien. Die Führung 44 (vgl. Fig. 8) der Unterbrechungsgeometrie wird durch den Radius 40, die Gerade 43, den Radius 42, den Winkel 37 und die Gerade 38 beschrieben. Diese kann parallel zur sogenannten Loudspeaker Membran sein, mit einem Abstand 39 oder auch unter einem Winkel zu dieser stehen. Des Weiteren kann die Unterbrechungsgeometrie so wohl erhaben als auch vertieft im Boden sein, bedeutet, dass die Führungskontur 44 mit dem Abstand 39 sowohl oberhalb als auch unterhalb der sogenannten Loudspeaker Membran liegen kann.

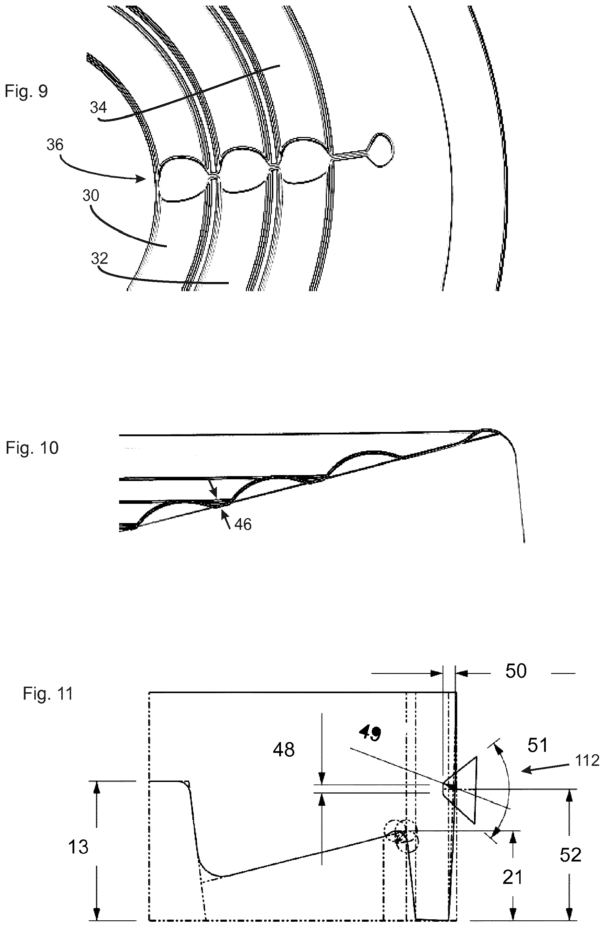

Die Querschnittskontur 45 (vgl. Fig. 8) für die Unterbrechungsgeometrie kann als Kreisgeometrie mit einem Durchmesser ausgeführt sein. Es wäre jedoch auch möglich, dass die Querschnittskontur als eine elliptische, trapezförmige, rechteckige und dreieckige Geometrie Variante ausgeführt werden oder auch als Mischformen dieser Geometrien. Wie in Fig. 9 dargestellt sollten die Stege bzw. die Unterbrechungsgeometrie die Zwischenräume der Geometrieelemente bzw. Rillen 30, 32 und 34 der Loudspeaker Membran unterbrechen, um das Umklappen der Membran bei entstehendem Vakuum zu ermöglichen. Die Unterbrechungsgeometrie sollte nicht verrundet sein, es ist aber auch möglich, dass diese verrundet ist. Die Stege werden durch die Übergänge zwischen den einzelnen Rillen 30, 32 und 34 unterbrochen.

Fig. 10 zeigt eine vergrößerte Darstellung der Rillengeometrien. Das Bezugszeichen 46 kennzeichnet einen Abstand zwischen der Lautsprechermembran und den einzelnen Rillen. Dieser Abstand sollte größer sein als 0,001mm, bevorzugt größer als 0,002mm, bevorzugt größer als 0,004mm, bevorzugt größer als 0,008mm und besonders bevorzugt größer als 0,01mm. Weiterhin sollte dieser Abstand kleiner sein als 2,0mm, bevorzugt kleiner als 1,5mm, bevorzugt kleiner als 1,0mm und besonders bevorzugt kleiner als 0,5mm.

Da die Flaschengeometrie und die Bodenseitenwand für diese Art von Boden sehr stabil sein muss, um im abgekühlten Zustand das definierte Umklappen der Loudspeaker Membran zu ermöglichen benötigt die Bodenseitenwand eine Stabilisierungsgeometrie, es ist aber auch vorstellbar, dass es auch ohne die Stabilisierungsgeometrie funktioniert.

Fig. 11 zeigt eine weitere Seitenansicht des Bodens, wobei hier auch die umlaufende Rille 112 dargestellt ist. Diese Rille bzw. Stabilisierungsgeometrie 112 kann als Trapezgeometrie, wie in Fig. 11 gezeigt ausgeführt sein, es ist aber auch jede andere kreisförmige, elliptische, rechteckige und dreieckige Geometrie oder auch Mischgeometrie als Variante für diesen "Fassring" denkbar. Das Bezugszeichen 49 beschreibt einen Öffnungswinkel der Rille und das Bezugszeichen 48 die Höhe eines Rillengrundes dieser Rille.

Die Höhenposition 52 kann in Abhängigkeit zur Höhe des Anspritzpunkts 13 und/oder zur Höhe 21 des Drehpunkts der Loudspeaker Membran definiert sein. Das Verhältnis der Höhe 21 zur Höhe 52 kann bevorzugt zwischen 1,0 und 2,5 sein. Das Verhältnis der Höhe 13 des Anspritzpunkts zur Höhe 52 kann bevorzugt zwischen 0,5 und 2,0 sein. Die Eintauchtiefe 50 der Stabilisierungsgeometrie bzw. Rille 112 steht bevorzugt senkrecht auf Außenfläche des Bodens.

Diese kann bevorzugt größer sein als 0,5mm, bevorzugt größer als 0,7mm und bevorzugt größer als 1,0mm. Weiterhin kann diese Höhe kleiner sein als 5,00mm, bevorzugt kleiner als 4mm und besonders bevorzugt kleiner als 3,00mm. Der Öffnungswinkel 51 kann bevorzugt größer sein als 50°, bevorzugt größer als 55° und besonders bevorzugt größer als 60°. Weiterhin kann dieser Winkel bevorzugt kleiner sein als 120°, bevorzugt kleiner als 110°, bevorzugt kleiner als 100° und besonders bevorzugt kleiner als 90°.

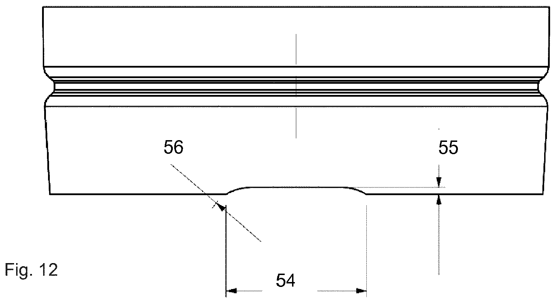

Fig. 12 zeigt eine weitere Seitenansicht des Bodenteils des Kunststoffbehältnisses. Um die Standfestigkeit des Bodens zu verbessern wurde eine Aussparung 54 eingebracht. Diese Aussparung unterteilt die Standfläche 53 in 2 bis 8 Teile. Ein weiterer Effekt der Aussparung ist, dass hierdurch die Ausprägung der Bodengeometrie beurteilt werden kann.

Die Breite der Aussparung 54 kann in einem Verhältnis zum Außendurchmesser 11 stehen muss dies aber nicht. Dieses Verhältnis kann zwischen 0,1 und 0,9 liegen. Die Höhe 55 der Aussparung 54 kann größer sein als 0,1mm, bevorzugt größer als 0,2mm, bevorzugt größer als 0,3mm, bevorzugt größer als 0,4mm und besonders bevorzugt größer als 0,5mm. Weiterhin kann diese Höhe bevorzugt kleiner sein als 6,0mm, bevorzugt kleiner als 5,0mm, bevorzugt kleiner als 4,0mm und besonders bevorzugt kleiner als 3,0mm.

Es wird in diesem Zusammenhang darauf hingewiesen, dass die einzelnen im Rahmen der Beschreibung angegebenen Massangaben in beliebiger Weise miteinander kombinierbar sind, insbesondere zieht, sofern nicht anders angegeben, ein bestimmtes Mass für eine bestimmte Größe nicht automatisch ein anderes Mass für eine andere Größe nach sich.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Gerade
- 2: Radius
- 3: Gerade
- 4: Radius
- 5: Gerade
- 6: Spline
- 7: Spline
- 8: Gerade
- 9: Gerade
- 10: Radius
- 11: Außenradius
- 12: Bodenhöhe
- 13: Höhe
- 15: Winkel
- 17: Standkreisdurchmesser
- 19: Winkel
- 20: Winkel
- 21: Höhe
- 22: Winkel
- 23: Winkel
- 24: Summe der Abstände
- 25, 26, 27, 28: Abstände
- 29,31,33: Tiefe
- 30, 32, 34: Rille
- 36: Steg
- 37: Winkel
- 38: Gerade
- 39: Abstand
- 40: Radius
- 42: Radius
- 43: Gerade
- 44: Führungskontur
- 45: Querschnittskontur
- 46: Abstand
- 48: Höhe des Rillengrundes der Rille 112
- 49: Öffnungswinkel der Rille 112
- 50: Eintauchtiefe
- 51: Öffnungswinkel
- 52: Höhe
- 54: Aussparung
- 55: Höhe
- 100: Kunststoffbehältnis
- 102: Bodenabschnitt
- 104: Mündungsabschnitt
- 112: Rille
- 114: oberer Bereich des Zentralbereichs 122
- 122: Zentralbereich
- 124: in Umfangsrichtung verlaufende Wandung
- 126: Schwenkabschnitt

- L: Längsrichtung
- R: radiale Richtung
- AA: Drehpunkt
- S1, S2: Schwenkstellung

## Patentansprüche

1. Kunststoffbehältnis (100) mit einem Mündungsabschnitt (104), einem sich an diesen Mündungsabschnitt in einer Längsrichtung (L) des Kunststoffbehältnisses (100) anschließenden Grundkörper (106), der ein Innenvolumen des Kunststoffbehältnisses (100) vollständig in einer Umfangsrichtung des Kunststoffbehältnisses (100) umgibt und mit einem Bodenabschnitt (102), der sich an den Grundkörper (106) anschließt, wobei dieser Bodenabschnitt (102) einen Zentralbereich (122) aufweist sowie eine in der Umfangsrichtung des Kunststoffbehältnisses (100) verlaufende Wandung (124), welche sich von dem Zentralbereich (122) zu dem Grundkörper (106) erstreckt, wobei der Zentralbereich (122) gegenüber dem Grundkörper zwischen wenigstens zwei Stellungen (S1, S2) schwenkbar ist, und wobei diese beiden Stellungen (S1, S2) sich hinsichtlich eines Innenvolumens des Kunststoffbehältnisses (100) unterscheiden, und wobei zum Erreichen dieser Schwenkstellungen zwischen dem Zentralbereich (122) und dem Grundkörper ein bezüglich der Längsrichtung (L) des Kunststoffbehältnisses (100) umlaufender Schwenkabschnitt (126) ausgebildet ist, wobei die Wandung (124) wenigstens teilweise bezüglich der Längsrichtung (L) des Kunststoffbehältnisses umlaufende und voneinander beabstandete Rillen (30, 32, 34) aufweist und der Zentralbereich (122) einen sich in Richtung des Innenraums des Kunststoffbehältnisses (100) erstreckenden Vorsprung (114) aufweist, **dadurch gekennzeichnet, dass** in der umlaufenden Wandung (124) sich wenigstens abschnittsweise in einer radialen Richtung (R) erstreckende Stege (36) angeordnet sind, wobei die Stege (36) die einzelnen Rillen (30, 32, 34) im Wesentlichen vollständig ausfüllen und durch Randabschnitte der Rillen (30, 32, 34) unterbrochen werden.

2. Kunststoffbehältnis (100) nach Anspruch 1,
**dadurch gekennzeichnet, dass**
der Schwenkabschnitt (126) radial außerhalb der umlaufenden Rillen (30, 32, 34) ausgebildet ist.

3. Kunststoffbehältnis (100) nach wenigstens einem der vorangegangenen Ansprüche, **dadurch gekennzeichnet, dass**
der Zentralbereich (122) in einem gekrümmten umlaufenden Übergangsabschnitt (4) in die Wandung (124) übergeht, wobei sich eine Krümmung dieses Übergangsabschnitts (4) in der ersten und der zweiten Schwenkstellung unterscheidet.

4. Kunststoffbehältnis (100) nach wenigstens einem der vorangegangenen Ansprüche, **dadurch gekennzeichnet, dass**
der Zentralbereich (122) einen im Wesentlichen senkrecht zu der Längsrichtung (L) ausgebildeten Zentrumsbereich (1) aufweist, der bevorzugt in der Längsrichtung (L) des Kunststoffbehältnisses (100) näher an dem Mündungsabschnitt (104) liegt als der Schwenkabschnitt (126).

5. Kunststoffbehältnis (100) nach wenigstens einem der vorangegangenen Ansprüche, **dadurch gekennzeichnet, dass**
sich in einer radialen Richtung des Kunststoffbehältnisses (100) an den Schwenkabschnitt (126) ein sich in der Längsrichtung (L) des Behältnisses (100) weg von dem Mündungsbereich (104) erstreckender umlaufender äußerer Übergangsabschnitt (8) anschließt.

6. Kunststoffbehältnis (100) nach Anspruch 5,
**dadurch gekennzeichnet, dass**
sich an den umlaufenden äußeren Übergangsabschnitt (8) ein sich im Wesentlichen senkrecht zu der Längsrichtung erstreckender Abstützabschnitt (9) des Kunststoffbehältnisses (100) anschließt.

7. Kunststoffbehältnis (1) nach wenigstens einem der vorangegangenen Ansprüche, **dadurch gekennzeichnet, dass**
in dem Grundkörper eine bezüglich der Längsrichtung (L) umlaufende Rille (112) angeordnet ist, wobei bevorzugt diese Rille in wenigstens einer Schwenkstellung (S1, S2) unterhalb wenigstens eines Abschnitts des Zentralbereichs angeordnet ist.

8. Kunststoffbehältnis (1) nach wenigstens einem der vorangegangenen Ansprüche, **dadurch gekennzeichnet, dass**
zwischen wenigstens zwei Rillen (30, 32, 34) ein sich in einer radialen Richtung des Behältnisses erstreckender Verbindungsabschnitt angeordnet ist

9. Blasformanordnung zum Herstellen von Kunststoffbehältnissen, wobei diese Blasformanordnung ein Bodenteil aufweist, welches eine Oberfläche aufweist, die zur Erzeugung eines Kunststoffbehältnisses nach wenigstens einem der vorangegangenen Ansprüche geeignet und bestimmt ist.

## Claims

1. Plastic container (100) with a mouth portion (104), a main body (106) adjoining this mouth portion in a longitudinal direction (L) of the plastic container (100), this main body completely surrounding an internal volume of the plastic container (100) in a circumferential direction of the plastic container (100), and with a base portion (102) which adjoins the main body (106), wherein this base portion (102) has a central region (122) as well as a wall (124) which runs in the circumferential direction of the plastic container (100) and extends from the central region (122) to the main body (106), wherein the central region (122) is pivotable relative to the main body between at least two positions (S1, S2), and wherein these two positions (S1, S2) differ with regard to an internal volume of the plastic container (100), and wherein, in order to reach these pivot positions between the central region (122) and the main body, a pivot section (126) is formed which is circumferential with respect to the longitudinal direction (L) of the plastic container (100), wherein the wall (124) has grooves (30, 32, 34) which are at least partially circumferential with respect to the longitudinal direction (L) of the plastic container and are spaced apart from one another, and the central region (122) has a projection (114) extending in the direction of the interior of the plastic container (100),
**characterised in that**
webs (36) extending at least partially in a radial direction (R) are arranged in the circumferential wall (124),
wherein the webs (36) fill the individual grooves (30, 32, 34) substantially completely and are interrupted by edge portions of the grooves (30, 32, 34).

2. Plastic container (100) according to claim 1,
**characterised in that**
the pivot section (126) is formed radially outside the circumferential grooves (30, 32, 34).

3. Plastic container (100) according to at least one of the preceding claims,
**characterised in that**
in a curved circumferential transition section (4) the central region (122) merges into the wall (124), wherein a curvature of this transition section (4) differs in the first and the second pivot position.

4. Plastic container (100) according to one of the preceding claims, **characterised in that**
the central region (122) has a centre region (1) which is formed substantially perpendicularly to the longitudinal direction (L) and which preferably lies nearer to the mouth portion (104) than the pivot section (126) in the longitudinal direction (L) of the plastic container (100).

5. Plastic container (100) according to at least one of the preceding claims,
**characterised in that**
a circumferential outer transition section (8) extending away from the mouth region (104) in the longitudinal direction (L) of the container (100) adjoins the pivot section (126) in a radial direction of the plastic container (100).

6. Plastic container (100) according to claim 5,
**characterised in that**
a support portion (9) of the plastic container (100) extending substantially perpendicularly to the longitudinal direction adjoins the circumferential outer transition section (8).

7. Plastic container (1) according to at least one of the preceding claims, **characterised in that**
a groove (112) which is circumferential with respect to the longitudinal direction (L) is arranged in the main body, wherein this groove is preferably arranged in at least one pivot position (S1, S2) below at least one section of the central region.

8. Plastic container (1) according to at least one of the preceding claims, **characterised in that**
a connecting section extending in a radial direction of the container is arranged between at least two grooves (30, 32, 34).

9. Blow moulding arrangement for producing plastic containers, wherein this blow moulding arrangement has a base part which has a surface suitable and intended for producing a plastic container according to at least one of the preceding claims.

## Revendications

1. Récipient en plastique (100) avec une partie d'embouchure (104), un corps de base (106) se raccordant à cette partie d'embouchure dans une direction longitudinale (L) du récipient en plastique (100), qui entoure un volume intérieur du récipient en plastique (100) entièrement dans une direction périphérique du récipient en plastique (100) et avec une partie fond (102), qui se raccorde au corps de base (106), dans lequel cette partie fond (102) présente une zone centrale (122) ainsi qu'une paroi (124) s'étendant dans la direction périphérique du récipient en plastique (100), laquelle s'étend à partir de la zone centrale (122) vers le corps de base (106), dans lequel la zone centrale (122) peut pivoter par rapport au corps de base entre au moins deux positions (S1, S2), et dans lequel ces deux positions (S1, S2) se différencient en ce qui concerne un volume intérieur du récipient en plastique (100), et dans lequel pour atteindre ces positions de pivotement une partie de pivotement (126) circonférentielle par rapport à la direction longitudinale (L) du récipient en plastique (100) est réalisée entre la zone centrale (122) et le corps de base, dans lequel la paroi (124) présente au moins en partie des rainures (30, 32, 34) circonférentielles par rapport à la direction longitudinale (L) du récipient en plastique et espacées les unes des autres et la zone centrale (122) présente une partie saillante (114) s'étendant en direction de l'espace intérieur du récipient en plastique (100),
**caractérisé en ce que**
des éléments jointifs (36) s'étendant au moins sur certaines parties dans une direction radiale (R) sont disposés dans la paroi (124) circonférentielle,
dans lequel les éléments jointifs (36) remplissent sensiblement entièrement les rainures (30, 32, 34) individuelles et sont interrompus par des parties de bord des rainures (30, 32, 34).

2. Récipient en plastique (100) selon la revendication 1,
**caractérisé en ce que**
la partie de pivotement (126) est réalisée radialement à l'extérieur des rainures (30, 32, 34) circonférentielles.

3. Récipient en plastique (100) selon au moins l'une des revendications précédentes,
**caractérisé en ce que**
la zone centrale (122) passe dans une partie de transition (4) circonférentielle courbée dans la paroi (124), dans lequel une courbure de cette partie de transition (4) se différencie dans la première et la deuxième position de pivotement.

4. Récipient en plastique (100) selon au moins l'une des revendications précédentes,
**caractérisé en ce que**
la zone centrale (122) présente une zone de centre (1) réalisée sensiblement perpendiculairement à la direction longitudinale (L), qui de préférence dans la direction longitudinale (L) du récipient en plastique (100) se situe plus près de la partie d'embouchure (104) que la partie de pivotement (126).

5. Récipient en plastique (100) selon au moins l'une des revendications précédentes,
**caractérisé en ce que**
dans une direction radiale du récipient en plastique (100) une partie de transition (8) extérieure circonférentielle s'étendant dans la direction longitudinale (L) du récipient (100) à distance de la zone d'embouchure (104) se raccorde à la partie de pivotement (126).

6. Récipient en plastique (100) selon la revendication 5,
**caractérisé en ce que**
une partie d'appui (9) du récipient en plastique (100) s'étendant sensiblement perpendiculairement à la direction longitudinale se raccorde à la partie de transition (8) extérieure circonférentielle.

7. Récipient en plastique (1) selon au moins l'une des revendications précédentes,
**caractérisé en ce que**
une rainure (112) circonférentielle par rapport à la direction longitudinale (L) est disposée dans le corps de base, dans lequel de préférence cette rainure est disposée dans au moins une position de pivotement (S1, S2) au-dessous d'au moins une partie de la zone centrale.

8. Récipient en plastique (1) selon au moins l'une des revendications précédentes,
**caractérisé en ce que**
une partie de liaison s'étendant dans une direction radiale du récipient est disposée entre au moins deux rainures (30, 32, 34).

9. Ensemble de moulage par soufflage pour fabriquer des récipients en plastique, dans lequel cet ensemble de moulage par soufflage présente une partie fond, laquelle présente une surface, qui est adaptée pour et destinée à la production d'un récipient en plastique selon au moins l'une des revendications précédentes.
